# FASCICULE DE BREVET EUROPEEN

(11) **EP 3 834 960 B1**
(45) Date de publication et mention de la délivrance du brevet: **07.06.2023**
(21) Numéro de dépôt: 20213310.4
(22) Date de dépôt: 11.12.2020
(51) Int. Cl.: B22F 1/052, B22F 5/00, B22F 9/08, B22F 10/25, B33Y 10/00, B33Y 70/00, B33Y 80/00, B23K 26/342, B23K 35/30, C22C 1/04, C22C 19/05, C23C 4/06, C23C 4/067, C23C 4/073, C23C 4/123, C23C 4/129, C23C 4/134, C23C 24/10, C23C 30/00

(54) **POUDRE DE RECHARGEMENT LASER, PROCÉDÉ DE FABRICATION ET MOULE ET ASSOCIÉS**
LASERAUFTRAGSCHWEISSPULVER, ENTSPRECHENDES HERSTELLUNGSVERFAHREN UND ENTSPRECHENDE FORM
LASER RECHARGING POWDER, ASSOCIATED MANUFACTURING METHOD AND MOULD

(30) Priorité: 13.12.2019 FR 1914419
(43) Date de publication de la demande: 16.06.2021
(73) Titulaire: Etablissements Chpolansky, 91460 Marcoussis (FR)
(72) Inventeur: BOURAHIMA, Fazati, 91640 BRIIS-SOUS-FORGES (FR)
(74) Mandataire: Regimbeau

(56) Documents cités:
- EP-A1- 2 743 361
- US-A- 3 825 420
- US-A1- 2003 098 090
- FAZATI BOURAHIMA ET AL: "Optimization of Microstructural Evolution during Laser Cladding of Ni Based Powder on GCI Glass Molds", KEY ENGINEERING MATERIALS, vol. 813, 22 juillet 2019 (2019-07-22), pages 185-190, XP055702443, DOI: 10.4028/www.scientific.net/KEM.813.185
- F. BOURAHIMA ET AL: "Laser cladding of Ni based powder on a Cu-Ni-Al glassmold: Influence of the process parameters on bonding quality and coating geometry", JOURNAL OF ALLOYS AND COMPOUNDS., vol. 771, 3 septembre 2018 (2018-09-03), pages 1018-1028, XP055702151, CH ISSN: 0925-8388, DOI: 10.1016/j.jallcom.2018.09.004

## Description

### DOMAINE DE L'INVENTION

La présente invention concerne de manière générale les pièces de fonderie dans le domaine de la verrerie, notamment les moules en fonte, en bronze (et autres alliages comprenant du cuivre et de l'étain) ou en acier utilisés pour confectionner des objets en verre tels que des bouteilles. Plus précisément, l'invention concerne la poudre métallique utilisée pour le rechargement en surface de tels moules en vue de leur finition ou de leur réparation, dans lequel la fusion du matériau déposé sur la surface à recharger est effectuée au moyen d'un faisceau laser.

### ETAT DE LA TECHNIQUE

Les moules en fonte, en bronze (et autres alliages comprenant du cuivre et de l'étain), ou en acier (notamment des aciers de type fer-carbone, aciers inoxydables, aciers réfractaires) qui sont généralement utilisés dans la confection d'objets en verre, ont tendance à s'user rapidement, en particulier dans des zones comme le plan de joint (ou couture), le fond, la bague ou encore le col du moule. En effet, lors de l'étape de moulage de la paraison, en l'occurrence du verre, les moules subissent un phénomène d'abrasion et/ou de corrosion en raison de la présence de silice dans le verre. Par ailleurs, lors d'un cycle de moulage, un moule peut subir de fortes contraintes thermiques et mécaniques, en passant dans un temps très court de 400°C à 800°C.

Afin de ne pas avoir à changer l'ensemble du moule, il a été proposé des techniques de rechargement au cours desquelles une couche d'alliage métallique est fusionnée sur la surface d'un moule, notamment au niveau des arêtes. Le moule ainsi obtenu est ensuite usiné après refroidissement afin d'obtenir la géométrie souhaitée.

Par le passé, le rechargement des moules était réalisé au chalumeau ou par Plasma Transféré d'Arc (PTA).

Le rechargement au chalumeau consiste à braser manuellement une poudre ou un fil métallique sur les surfaces de moulage du moule. Il présente donc plusieurs inconvénients, parmi lesquels la pénibilité du travail pour l'opérateur, la nécessité d'un savoir-faire de l'opérateur et une grande variabilité des résultats. La zone du moule ayant été surchauffée lors du rechargement présente en outre des propriétés thermiques et mécaniques différentes du reste, en particulier dans le cas des moules en fonte.

Le rechargement par Plasma Transféré d'Arc (PTA) quant à lui suit un principe similaire au rechargement au chalumeau, la source de chaleur étant remplacée par une colonne plasma. L'avantage de ce procédé est que le plasma présente une température beaucoup plus importante que la flamme d'un chalumeau (de 15000°C à 20000°C), ce qui permet de chauffer plus rapidement le matériau de rechargement à faire fondre et la surface de la pièce sur laquelle on le dépose, restreignant ainsi les dimensions de la zone affectée thermiquement à environ 2 mm. Toutefois, il est très difficile de l'appliquer à des fontes lamellaires. Par ailleurs, ce procédé nécessite de préchauffer le moule à une température de l'ordre de 350°C, ce qui impose de refroidir la pièce par paliers après le rechargement si l'on souhaite préserver les propriétés mécaniques et thermiques de la fonte, ce qui peut durer plusieurs heures.

Il a donc été proposé d'effectuer le rechargement des moules de verrerie à l'aide d'un faisceau laser. Un tel procédé comprend généralement des étapes d'usinage du moule, de dépôt de poudre métallique sur la surface usinée et de fusion de la poudre sur la surface usinée à l'aide d'un faisceau laser. On pourra notamment se référer au document n° EP 2 540 433 au nom de la Demanderesse pour plus de détails. Ce procédé de rechargement laser est fortement plébiscité dans la mesure où il permet de recharger rapidement tout type de moules de verrerie, qu'il est moins sensible à la composition de la fonte utilisée et que son taux de succès dépasse celui des procédés précédemment utilisés.

En particulier, la qualité métallurgique de la zone de rechargement est fortement améliorée. En effet, il n'est pas nécessaire de préchauffer le moule avant rechargement et la température du faisceau laser est très élevée de sorte que la fusion de la poudre métallique peut être réalisé plus rapidement, ce qui réduit drastiquement la taille de la zone affectée thermiquement du moule.

En revanche, la Demanderesse s'est aperçue du fait que la vitesse de solidification de la poudre de rechargement étant très rapide, la qualité du cordon obtenu dépendait fortement de la stabilité du débit de poudre métallique lors des étapes de dépôt et de fusion décrites ci-avant. En effet, toute modification du débit a pour conséquence une modification de la puissance du laser sur la surface à recharger, et donc une qualité du cordon obtenu qui n'est pas uniforme sur la surface de rechargement. De plus, lorsque le nuage de poudre est discontinu, la surface à recharger n'est plus protégée par les particules de sorte que le faisceau laser risque de l'endommager.

Par ailleurs, compte-tenu de la vitesse importante de la solidification de l'alliage métallique dans la zone de rechargement (autour de 1,8.10³ K/s), la porosité du cordon de rechargement obtenu pouvait être conséquente, ce qui risque de dégrader la qualité du rechargement. Les poudres métalliques utilisées habituellement dans le rechargement type PTA n'est donc pas adaptée au rechargement laser.

Le document US 2003/098090 décrit une poudre métallique à base de nickel pour obtenir un revêtement obtenu par traitement thermique et notamment par projection thermique ou à l'aide d'une torche plasma. Il ne s'agit donc pas de poudre adaptée au rechargement laser.

Le document EP 2 743 361 décrit une poudre métallique à base de nickel pour une application notamment au laser cladding.

L'article de F. BOURAHIMA et al., "Optimization of Microstructural Evolution during Laser Clading of Ni Based Powder on GCI Glass Molds", Key Engineering Materials", décrit une poudre métallique à base de nickel pour le rechargement d'un moule de verrerie.

L'article de F. BOURAHIMA et al., "Laser Cladding of Ni Based Powder on a Cu-Ni-Al Glassmold: Influence of the Process Parameters on Bonding Quality and Coating Geometry", Journal of Alloys and Compounds, décrit une poudre métallique à base de nickel pour le rechargement d'un moule de verrerie.

Le document US 3 825 420 décrit une poudre métallique à base de nickel pour la fabrication par façonnage (forge) d'une aube de compresseur ou de turbine. La poudre métallique décrite dans ce document n'est donc pas adaptée au rechargement laser.

### EXPOSE DE L'INVENTION

Un but de l'invention est de surmonter les inconvénients précités de l'état de la technique.

En particulier, un but de l'invention est d'améliorer la robustesse du rechargement d'un moule de verrerie à l'aide d'un faisceau laser afin d'obtenir des cordons de rechargement de qualité uniforme tout en protégeant la surface à recharger.

Un autre but de l'invention est d'améliorer la qualité métallurgique du cordon de rechargement obtenu, notamment lors d'un rechargement d'un moule de verrerie à l'aide d'un faisceau laser.

Il est à cet effet proposé, selon un premier aspect de l'invention une poudre métallique à base de nickel pour le rechargement d'un moule de verrerie par laser, ladite poudre métallique ayant une composition telle que définie dans la revendication 1.

De plus, au moins 61 % en masse des grains de la poudre métallique ont une largeur maximale supérieure ou égale à 45 micromètres et inférieure à 90 micromètres.

Certaines caractéristiques préférées mais non limitatives de la poudre métallique sont les suivantes, prises individuellement ou en combinaison :
- les grains de poudre présentent la répartition granulométrique suivante :
   * entre 1 % et 10 % en masse des grains de poudre ont une largeur maximale supérieure ou égale à 45 micromètres et inférieure à 53 micromètres
   * entre 60 % et 85 % en masse des grains de poudre ont une largeur maximale supérieure ou égale à 53 micromètres et inférieure à 90 micromètres.
- la totalité des grains de poudre ont une largeur maximale inférieure à 125 micromètres.
- au plus 2 % en masse des grains de poudre ont une largeur maximale inférieure à 45 micromètres.
- les grains de poudre présentent la répartition granulométrique suivante :
   * entre 7 % et 30 % en masse des grains de poudre ont largeur maximale supérieure ou égale à 90 micromètres et inférieure à 106 micromètres, de préférence 7 % et 30 % en masse des grains de poudre ont largeur maximale supérieure ou égale à 90 micromètres et inférieure à 106 micromètres et
   * entre 1 % et 10 % en masse des grains de poudre ont largeur maximale supérieure ou égale à 106 micromètres et inférieure à 125 micromètres.

Selon un deuxième aspect, l'invention propose un procédé de fabrication d'une poudre métallique selon le premier aspect, ledit procédé de fabrication de la poudre métallique à base de nickel comprenant l'ensemble des étapes telles que définies dans la revendication 6.

Certaines caractéristiques préférées mais non limitatives du procédé de fabrication selon le premier aspect sont les suivantes, prises individuellement ou en combinaison :
- au cours de l'étape S4, les grains sont tamisés de sorte à présenter la répartition granulométrique suivante :
   * entre 1 % et 10 % en masse des grains de poudre ont une largeur maximale supérieure ou égale à 45 micromètres et inférieure à 53 micromètres
   * entre 60 % et 85 % en masse des grains de poudre ont une largeur maximale supérieure ou égale à 53 micromètres et inférieure à 90 micromètres.
- au cours de l'étape S4, les grains sont tamisés de sorte que la totalité des grains de la poudre ont une largeur maximale inférieure à 125 micromètres.
- au cours de l'étape S4, les grains sont tamisés de sorte qu'au plus 2 % en masse des grains de poudre ont une largeur maximale inférieure à 45 micromètres.
- au cours de l'étape S4, les grains sont tamisés de sorte à présenter la répartition granulométrique suivante :
   * entre 7 % et 30 % en masse des grains de poudre ont une largeur maximale supérieure ou égale à 90 micromètres et inférieure à 106 micromètres, de préférence entre 7 % et 25 % en masse des grains de poudre ont largeur maximale supérieure ou égale à 90 micromètres et inférieure à 106 micromètres et
   * entre 1 % et 10 % en masse des grains de poudre ont une largeur maximale supérieure ou égale à 106 micromètres et inférieure à 125 micromètres.

Selon un troisième aspect, l'invention propose un procédé de rechargement d'un moule de verrerie comprenant les étapes suivantes :
- déposer une quantité de poudre métallique selon le premier aspect sur une surface du moule de verrerie et, simultanément,
- fusionner localement la poudre métallique sur la surface du moule de verrerie au moyen d'un faisceau d'un laser de manière à former une zone de renforcement.

### DESCRIPTION DES FIGURES

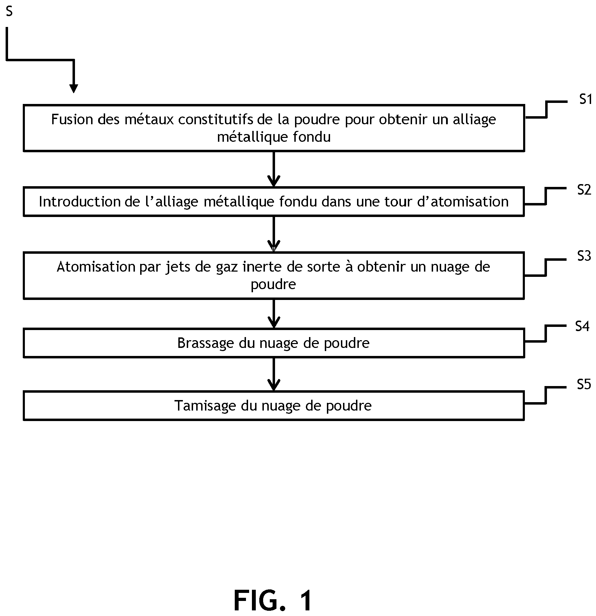

D'autres caractéristiques, buts et avantages de l'invention ressortiront de la description qui suit, qui est purement illustrative et non limitative, et qui doit être lue en regard de la figure 1 annexée qui représente un organigramme d'étapes d'un procédé de fabrication d'une poudre métallique selon un mode de réalisation de l'invention.

### DESCRIPTION DETAILLEE DE L'INVENTION

Un exemple de procédé de rechargement par laser d'un moule de verrerie a été décrit dans le document n° EP 2 540 433 cité plus haut. De manière générale, un tel procédé permet de renforcer le moule de verrerie, généralement au niveau des zones du moule susceptibles d'être abîmées au cours de leur utilisation, que ce soit par fatigue du métal ou en raison des fortes températures subies. Ce procédé peut être utilisé en tant qu'étape de finition du moule afin de le renforcer pour qu'il résiste mieux aux différents chocs thermiques et mécaniques qu'il va subir au cours de son utilisation (le moule de verrerie étant alors neuf, ou du moins pas encore endommagé), ou pour le réparer.

Les moules pouvant faire l'objet d'un rechargement au laser sont des moules conventionnels dans le domaine de la verrerie. Par exemple, il peut s'agir de moules constitués de fonte à graphites lamellaires ou sphéroïdales, la fonte pouvant typiquement comprendre un pourcentage de carbone compris de préférence entre 3.3% en masse et 3.6% en masse, et dans tous les cas inférieur à 4.55% en masse. Les moules peuvent également être constitué de bronze (et autres alliages comprenant du cuivre et de l'étain) ou d'acier comme évoqué ci-dessus.

Dans une forme de réalisation, le rechargement laser peut être réalisé conformément aux étapes suivantes :
- usinage de la surface à recharger du moule, typiquement une arête, de manière à former une surface plane, par exemple un méplat ou un chanfrein,
- dépôt d'une quantité de poudre de rechargement déterminée sur la surface ainsi usinée, le matériau de rechargement comprenant un alliage métallique à base de nickel tel que défini dans la revendication 1, et, simultanément,
- fusion locale de la poudre de rechargement sur la surface usinée au moyen d'un faisceau laser, de manière à former un cordon de rechargement sur la surface et obtenir une zone de renforcement.

L'étape de dépôt est réalisée par projection de la poudre métallique à l'aide d'une buse, qui peut être coaxiale avec le faisceau laser ou distincte du laser mais mobile solidairement en mouvement de celui-ci. Par ailleurs, suite à la fusion et solidification de la poudre de rechargement, le procédé peut comprendre une étape de finition au cours de laquelle le cordon est usiné par des techniques conventionnelles.

Afin d'améliorer la robustesse du procédé de rechargement par laser, la granulométrie de la poudre métallique est contrôlée afin de garantir un écoulement stable, continu et uniforme de la poudre métallique lors de son dépôt sur la surface à recharger et donc de stabiliser le débit de l'écoulement et la puissance laser sur le moule tout en assurant la formation continue d'un nuage de poudre entre la sortie de la buse et la surface à recharger. La puissance du laser au niveau de la surface à recharger du moule est en effet variable en fonction du débit de poudre déposée et du nuage de poudre entre la sortie de la buse et ladite surface. En effet, concernant l'impact du nuage de particule, on observe de manière générale que 20 % environ de la puissance incidente est absorbée par les particules et 12 % est utilisée pour la fusion de la poudre. En fonction du nuage de poudre, entre 4 % et 18 % de la puissance incidente est donc susceptible de fusionner le substrat.

À cet effet, au moins 61 % en masse des grains de la poudre métallique ont une largeur maximale supérieure ou égale à 45 micromètres et inférieure à 90 micromètres. Par largeur d'un grain, on comprendra ici la distance entre deux droites parallèles (ou « lignes d'appui ») qui sont tangentes à la surface fermée formée par le grain en deux points distincts. La largeur maximale correspond donc à la plus grande largeur du grain lorsque les droites parcourent sa surface.

En maîtrisant la répartition granulométrique de la poudre, il devient ainsi possible de contrôler l'écoulement du débit de poudre au cours de l'étape de dépôt et de stabiliser ainsi la puissance du laser sur la surface à recharger.

On notera que la granulométrie de la poudre peut être déterminée par toute méthode de mesure conventionnelle, les méthodes de mesure actuelles donnant des valeurs sensiblement comparables. A titre d'exemple, la granulométrie peut être déterminée grâce à un diffractomètre laser suivant la norme ISO 13320:2009 en voie sèche ou par immersion de la poudre dans de l'eau de sorte à obtenir un spectre granulométrique de plusieurs échantillons du lot de poudre étudié. Ces mesures fournissent les paramètres granulométriques principaux de la poudre, tels que le d10, d50 ou d90 (dx (µm) étant le diamètre pour lequel les particules de dimension inférieure à dx constituent x% de la masse totale du lot analysé ; d50 est ainsi appelé "diamètre médian").

Dans une forme de réalisation, la totalité des grains présente un largeur maximale supérieure ou égale à 45 micromètres et inférieure à 90 micromètres, pour assurer un débit constant de poudre et une bonne accroche sur la surface à recharger. Avantageusement, une telle granulométrie permet d'obtenir une poudre peu volatile qui fusionne de manière uniforme au contact de la surface à recharger.

Toutefois, il ressort à l'usage qu'une telle granulométrie peut être difficile à obtenir industriellement pour un coût raisonnable.

Dans une forme de réalisation, la largeur maximale d'au plus 35 % en masse des grains de poudre est donc inférieure à 45 micromètres ou supérieure ou égale à 90 micromètres. Par ailleurs, la répartition granulométrique de la poudre suit sensiblement la forme d'une fonction gaussienne afin de garantir la présence continue d'un nuage de poudre lors du rechargement de la surface avec le faisceau laser.

Cependant, pour éviter que la poudre ne soit trop volatile et qu'elle accroche suffisamment la surface à recharger, au plus 2 % en masse des grains de poudre présente une largeur maximale inférieure à 45 micromètres, La poudre métallique est ainsi suffisamment captée par le faisceau laser pour obtenir un cordon uniforme.

Par ailleurs, pour assurer une fusion uniforme des grains de poudre par le laser à la surface du moule, la largeur maximale de la totalité des grains de la poudre métallique est inférieure à 125 micromètres. De préférence, au plus 90 % en masse des grains de poudre présente un diamètre maximal supérieur ou égal à 106 micromètres mais inférieur à 125 micromètres.

Afin d'améliorer encore l'industrialisation du procédé de fabrication de la poudre sans en augmenter le coût de revient, toute la répartition granulométrique de la totalité de la poudre est maîtrisée. Par exemple, la poudre peut présenter la granulométrie suivante :

| | | | | | |
|---|---|---|---|---|---|
| Largeur maximale des grains (micromètres) | < 45 | [45 ; 53[ | [53 ;90[ | [90 ;106[ | [106 ;125[ |
| Pourcentage massique (%) | < 2 | [1 ; 10] | [60 ; 80] | [7 ; 25] | [1 ; 10] |

Une telle répartition granulométrique permet ainsi de garantir un débit maîtrisé et constant lors de l'étape de dépôt de la poudre sur la surface à recharger et d'obtenir un cordon de rechargement de qualité.

À titre de comparaison, dans le cas d'une poudre pour rechargement au plasma (PTA), le bain de fusion au niveau de la zone de rechargement est lent de sorte que l'irrégularité éventuelle de l'écoulement de la poudre et le contrôle de sa granulométrie ont une influence négligeable en comparaison avec le cas d'un rechargement par laser.

### Composition chimique de la poudre métallique

La poudre métallique est à base de nickel et consiste en au moins 90 % en masse de nickel, du chrome, du bore et du silicium, la poudre comprenant au plus 0.3% en masse de chrome, entre 1.3% et 1.7% en masse de bore, entre 1.5% et 3.0% en masse de silicium, la poudre comprenant en outre du fer dans un pourcentage massique inférieur à 1.0%, et du carbone dans un pourcentage massique inférieur à 0.2%, ainsi que de l'oxygène dans un pourcentage massique au plus de 0.025 %.

L'utilisation d'une poudre à base de nickel permet d'obtenir un cordon de rechargement très résistant mécaniquement et thermiquement tout en conférant au moule une bonne résistance à la corrosion.

Le chrome permet d'améliorer la résistance mécanique du moule, notamment vis-à-vis de la paraison et d'augmenter sa dureté. Selon l'invention, la poudre comprend au plus 0,3 % en masse de chrome.

Le bore permet d'améliorer la fluidité et la coulabilité de la poudre et de baisser son point de fusion. Selon l'invention, la poudre comprend entre 1,3 % et 1,7 % en masse de bore.

Le silicium a pour fonction d'augmenter la résistance mécanique du cordon une fois refroidi en créant une phase de siliciure de nickel (Ni-NisSi), très ductile et qui devient très résistante lors de sa formation. Selon l'invention, la poudre comprend entre 1,5 % et 3,0 % en masse de silicium, de préférence entre 1,6 % et 2,75 % de silicium (bornes incluses), par exemple exactement 2,5 % de silicium.

Selon l'invention, la poudre comprend également du fer pour réduire la température de fusion de la poudre et du carbone pour améliorer la résistance mécanique.

La poudre métallique comprend au plus 1.0 % en masse de fer et au plus 0.2 % en masse de carbone.

Un exemple de poudre métallique conforme à l'invention comprend : une base de nickel, 0,3 % en masse de fer, 1,3 % en masse de bore, 0,01 % en masse de carbone, 2,3 % en masse de silicium, 0,30 % en masse de chrome et 0,02 % en masse d'oxygène.

Afin de limiter les porosités dans le cordon obtenu par rechargement au laser à l'aide de la poudre métallique, la teneur en oxygène dans la poudre est contrôlée de sorte à être la plus faible possible. Selon l'invention, la poudre comprend au plus 0,025 % en masse d'oxygène. En d'autres termes, la poudre présente une teneur en oxygène inférieure ou égale à 250 ppm.

En effet, et en particulier lorsque le moule de verrerie est en fonte ou en acier (qui comprennent du carbone), du dioxyde de carbone (CO₂) et du monoxyde de carbone (CO) sont générés lors de la solidification du cordon sur la surface de rechargement. Or, le refroidissement étant très rapide (de l'ordre de 1,8.10⁸ K/S), ces gaz se retrouvent enfermés dans le cordon lors de sa solidification, ce qui crée des porosités. Il en découle que le contrôle de la teneur en oxygène pendant l'étape d'atomisation (et donc, la teneur en oxygène présente au final dans la poudre métallique) a pour effet de réduire la quantité de gaz générée lors de la solidification du cordon, et donc la porosité du cordon de rechargement obtenu.

La température de fusion d'une poudre métallique à base de nickel comprenant du chrome, du bore, du silicium, du fer et du carbone dans les proportions indiquées ci-avant est par exemple de l'ordre de 1400 °C.

Sa dureté est par ailleurs inférieure ou égale à 25 HRC afin de permettre son usinage ultérieur.

La densité vraie de cette poudre métallique est comprise entre 8 g/cm³ et 7 g/cm³. La densité vraie est déterminée ici conformément aux prescriptions de la norme NF EN ISO 8130-2 (Janvier 2011) relative aux « Poudres pour revêtement - Partie 2 : détermination de la masse volumique à l'aide d'un pycnomètre à gaz (méthode de référence) ».

### Procédé de fabrication S de la poudre métallique

La poudre métallique est obtenue par atomisation par jet de gaz par gravité, de préférence par jets de gaz inerte.

Pour cela, au cours d'une étape S1, les éléments constitutifs de la poudre à fabriquer (nickel, chrome, bore, silicium et le cas échéant fer et/ou carbone) sont fusionnés et mélangés dans les proportions finales voulues pour la poudre dans un four, généralement à induction. A cet effet, les métaux bruts comprenant du nickel, du chrome, du bore et du silicium sont fusionnés de sorte à obtenir un alliage métallique liquide consistant d'au moins 90 % en masse de nickel, au plus 0.3% en masse de chrome, entre 1.3% et 1.7% en masse de bore, entre 1.5% et 3.0% en masse de silicium, du fer dans un pourcentage massique inférieur à 1.0%, et du carbone dans un pourcentage massique inférieur à 0.2%.

Au cours d'une étape S2, l'alliage métallique ainsi fondu est introduit dans une tour d'atomisation. Afin d'obtenir une teneur en oxygène inférieure ou égal à 250 ppm, l'alliage métallique tombe en chute libre à travers une buse de coulée par gravité (atomiseur type « free-fall » en anglais) dans la tour d'atomisation. Au cours de cette étape, l'alliage métallique est frappé par le ou les jets de gaz en aval de la sortie de la buse de coulée. En effet, la Demanderesse a constaté que, lorsque l'alliage métallique est transféré du four à la tour d'atomisation via une buse (atomiseur type « close-couple » en anglais, où le jet gazeux est injecté sur l'alliage métallique dès sa sortie de la buse de coulée), le taux en oxygène dans la poudre métallique finale est sensiblement plus élevé.

Au cours d'une étape S3, l'alliage métallique, qui est liquide, est transformé dans la tour d'atomisation en gouttelettes de métal par application d'un gaz sous haute pression et haute vitesse (atomisation par jet de gaz). Le gaz est de préférence un gaz inerte, par exemple de l'azote.

Ces gouttelettes sont alors refroidies de sorte à solidifier, pour obtenir un nuage de poudre.

Au cours d'une étape S4, le nuage de poudre obtenu à l'étape S3 est brassé afin de séparer les grains de poudre de leurs satellites. Les satellites sont alors évacués.

Au cours d'une étape S5, les grains de poudre sont tamisés de sorte à obtenir la répartition granulométrique choisie telle que, par exemple, la répartition granulométrique du Tableau 1.

Le tamisage du nuage de poudre brassé peut être réalisé suivant toute technique adaptée, par exemple par granulométrie laser (technique basée sur la diffraction de la lumière) ou encore à l'aide de tamis successifs ayant chacun un maillage adapté.

### Exemple comparatif :

Une première poudre métallique et une deuxième poudre métallique (toutes deux non couvertes par la revendication 1) sont appliquées sur un moule en fonte à graphite lamellaire suivant le procédé de rechargement décrit ci-avant, par projection de la poudre métallique à l'aide d'une buse 3-jets avec le faisceau laser et fusion de la poudre métallique à l'aide du faisceau laser. Les poudres sont chacune appliquées dans des zones différentes du moule afin de pouvoir comparer l'état de surface du dépôt obtenu. La puissance du faisceau laser est de 2000 W, sa vitesse de déplacement par rapport au moule est de 6,5 mm/s et le débit de poudre est égal à 27,5 g/min.

La première poudre comprend une base de nickel, 0,34 % en masse de fer, 1,59 % en masse de bore, 0,04 % en masse de carbone, 2,41 % en masse de silicium, 0,37 % en masse de chrome et 0,015 % en masse d'oxygène. Le taux d'oxygène est donc de 150 ppm.

La première poudre métallique présente la répartition granulométrique suivante :
0,4 % en masse des grains de la poudre métallique ont une largeur maximale comprise entre 38 et 45 µm ;
1,8 % en masse des grains de la poudre métallique ont une largeur maximale comprise entre 45 et 53 µm ;
68,14 % en masse des grains de la poudre métallique ont une largeur maximale comprise entre 53 et 90 µm ;
28,56 % en masse des grains de la poudre métallique ont une largeur maximale comprise entre 90 et 106 µm ; et
1,10 % en masse des grains de la poudre métallique ont une largeur maximale comprise entre 106 et 125 µm.

La deuxième poudre métallique comprenant une base de nickel, 0,26 % en masse de fer, 1,38 % en masse de bore, 0,03 % en masse de carbone, 2,49 % en masse de silicium, 0,23 % en masse de chrome et 0,036 % en masse d'oxygène est appliquée sur un même moule en fonte à graphite lamellaire suivant le même procédé de rechargement que la première poudre. Le taux d'oxygène est donc de 386 ppm.

La deuxième poudre métallique présente la répartition granulométrique suivante :
1,60 % en masse des grains de la poudre métallique ont une largeur maximale comprise entre 38 et 45 µm ;
10,71 % en masse des grains de la poudre métallique ont une largeur maximale comprise entre 45 et 53 µm ;
61,06 % en masse des grains de la poudre métallique ont une largeur maximale comprise entre 53 et 90 µm ;
20,81 % en masse des grains de la poudre métallique ont une largeur maximale comprise entre 90 et 106 µm ; et
5,31 % en masse des grains de la poudre métallique ont une largeur maximale comprise entre 106 et 125 µm.

Il ressort que la surface rechargée avec la deuxième poudre métallique présente des porosités en grande quantité au niveau du dépôt. Ces porosités peuvent atteindre 128 µm de diamètre et présente une répartition hétérogène. A titre comparaison, le dépôt obtenu à partir de la première poudre, dont le taux d'oxygène est inférieur à 250 ppm, présente de très faibles porosités (inférieures à 40 µm) qui sont réparties de manière homogène. Or, il ressort que des dépôts ayant des porosités homogènes inférieures à 40 µm n'ont pas d'impact sur l'état de surface du verre.

## Revendications

1. Poudre métallique à base de nickel pour le rechargement d'un moule de verrerie par laser, ladite poudre métallique consistant d'au moins 90 % en masse de nickel, du chrome, du bore et du silicium, la poudre comprenant au plus 0.3% en masse de chrome, entre 1.3% et 1.7% en masse de bore, entre 1.5% et 3.0% en masse de silicium, la poudre comprenant en outre du fer dans un pourcentage massique inférieur à 1.0%, et du carbone dans un pourcentage massique inférieur à 0.2%, au moins 61 % en masse des grains de la poudre métallique ont une largeur maximale supérieure ou égale à 45 micromètres et inférieure à 90 micromètres, la granulométrie étant déterminée grâce à un diffractomètre laser suivant la norme ISO 13320:2009 en voie sèche ou par immersion de la poudre dans de l'eau de sorte à obtenir un spectre granulométrique de plusieurs échantillons du lot de poudre étudié, la poudre métallique étant **caractérisée en ce qu'**elle comprend au plus 0,025 % en masse d'oxygène.

2. Poudre métallique selon la revendication 1, dans laquelle les grains de poudre présentent la répartition granulométrique suivante :
- entre 1 % et 10 % en masse des grains de poudre ont une largeur maximale supérieure ou égale à 45 micromètres et inférieure à 53 micromètres
- entre 60 % et 85 % en masse des grains de poudre ont une largeur maximale supérieure ou égale à 53 micromètres et inférieure à 90 micromètres.

3. Poudre métallique selon l'une des revendications 1 ou 2, dans laquelle la totalité des grains de poudre ont une largeur maximale inférieure à 125 micromètres.

4. Poudre métallique selon l'une des revendications 1 à 3, dans laquelle au plus 2 % en masse des grains de poudre ont une largeur maximale inférieure à 45 micromètres.

5. Poudre métallique selon l'une des revendications 1 à 4, dans laquelle les grains de poudre présentent la répartition granulométrique suivante :
- entre 7 % et 30 % en masse des grains de poudre ont largeur maximale supérieure ou égale à 90 micromètres et inférieure à 106 micromètres, de préférence entre 7 % et 25 % en masse des grains de poudre ont largeur maximale supérieure ou égale à 90 micromètres et inférieure à 106 micromètres et
- entre 1 % et 10 % en masse des grains de poudre ont largeur maximale supérieure ou égale à 106 micromètres et inférieure à 125 micromètres.

6. Procédé de fabrication (S) d'une poudre métallique selon l'une des revendications 1 à 5, comprenant les étapes suivantes :
- S1 : Fusion de métaux comprenant du nickel, du chrome, du bore et du silicium de sorte à obtenir un alliage métallique liquide consistant d'au moins 90 % en masse de nickel, au plus 0.3% en masse de chrome, entre 1.3% et 1.7% en masse de bore, entre 1.5% et 3.0% en masse de silicium, du fer dans un pourcentage massique inférieur à 1.0%, et du carbone dans un pourcentage massique inférieur à 0.2%
- S2 : Introduction de l'alliage métallique liquide par gravité dans une tour d'atomisation
- S3 : Atomisation de l'alliage métallique liquide de sorte à obtenir un nuage de poudre
- S4 : Tamisage du nuage de poudre de sorte à obtenir la poudre métallique le procédé de fabrication (S) étant **caractérisé en ce que** l'étape de tamisage est réalisée de sorte qu'au moins 61 % en masse des grains de la poudre métallique ont une largeur maximale supérieure ou égale à 45 micromètres et inférieure à 90 micromètres, la granulométrie étant déterminée grâce à un diffractomètre laser suivant la norme ISO 13320:2009 en voie sèche ou par immersion de la poudre dans de l'eau de sorte à obtenir un spectre granulométrique de plusieurs échantillons du lot de poudre étudié,
le procédé de fabrication (S) étant **caractérisé en ce qu'**une teneur en oxygène de la poudre métallique est contrôlée au cours de l'étape S2 de sorte que la poudre métallique comprend au plus 0.025 % en masse d'oxygène.

7. Procédé de fabrication (S) selon la revendication 6, dans lequel, au cours de l'étape S4, les grains sont tamisés de sorte à présenter la répartition granulométrique suivante :
- entre 1 % et 10 % en masse des grains de poudre ont une largeur maximale supérieure ou égale à 45 micromètres et inférieure à 53 micromètres
- entre 60 % et 85 % en masse des grains de poudre ont une largeur maximale supérieure ou égale à 53 micromètres et inférieure à 90 micromètres.

8. Procédé de fabrication (S) selon l'une des revendications 6 ou 7, dans lequel, au cours de l'étape S4, les grains sont tamisés de sorte que la totalité des grains de la poudre ont une largeur maximale inférieure à 125 micromètres.

9. Procédé de fabrication (S) selon l'une des revendications 6 à 8, dans lequel, au cours de l'étape S4, les grains sont tamisés de sorte qu'au plus 2 % en masse des grains de poudre ont une largeur maximale inférieure à 45 micromètres.

10. Procédé de fabrication (S) selon l'une des revendications 7 à 9, dans lequel, au cours de l'étape S4, les grains sont tamisés de sorte à présenter la répartition granulométrique suivante :
- entre 7 % et 30 % en masse des grains de poudre ont une largeur maximale supérieure ou égale à 90 micromètres et inférieure à 106 micromètres, de préférence 7 % et 25 % en masse des grains de poudre ont largeur maximale supérieure ou égale à 90 micromètres et inférieure à 106 micromètres et
- entre 1 % et 10 % en masse des grains de poudre ont une largeur maximale supérieure ou égale à 106 micromètres et inférieure à 125 micromètres.

11. Procédé de rechargement d'un moule de verrerie comprenant les étapes suivantes :
- déposer une quantité de poudre métallique selon l'une des revendications 1 à 5 sur une surface du moule de verrerie et, simultanément,
- fusionner localement la poudre métallique sur la surface du moule de verrerie au moyen d'un faisceau d'un laser de manière à former une zone de renforcement.

## Patentansprüche

1. Metallpulver auf Nickelbasis für das Laserauftragsschweißen einer Glaswarenform, wobei das Metallpulver aus mindestens 90 Massenprozent Nickel, Chrom, Bor und Silizium besteht, das Pulver höchstens 0,3 Massenprozent Chrom, zwischen 1,3 und 1,7 Massenprozent Bor, zwischen 1,5 und 3,0 Massenprozent Silizium enthält, das Pulver außerdem Eisen in einem Massenprozent von weniger als 1,0 % und Kohlenstoff in einem Massenprozent von weniger als 0,2 % enthält, mindestens 61 Massenprozent der Körner des Metallpulvers haben eine maximale Breite von größer oder gleich 45 Mikrometer und kleiner als 90 Mikrometer, wobei die Korngröße mit einem Laserdiffraktometer nach ISO 13320/2009 bestimmt wird, das trocken oder durch Eintauchen des Pulvers in Wasser gesendet wird, um ein Korngrößenspektrum von mehreren Proben der untersuchten Pulvercharge zu erhalten, wobei das Metallpulver **dadurch gekennzeichnet ist, dass** es höchstens 0,025 Massenprozent Sauerstoff enthält.

2. Metallpulver nach Anspruch 1, wobei die Pulverkörner die folgende Korngrößenverteilung aufweisen:
- zwischen 1 und 10 Massenprozent der Pulverkörner haben eine maximale Breite von größer oder gleich 45 Mikrometern und kleiner als 53 Mikrometern
- zwischen 60 und 85 Massenprozent der Pulverkörner haben eine maximale Breite von größer oder gleich 53 Mikrometern und kleiner als 90 Mikrometern.

3. Metallpulver nach einem der Ansprüche 1 oder 2, wobei die Gesamtheit der Pulverkörner eine maximale Breite von weniger als 125 Mikrometern aufweist.

4. Metallpulver nach einem der Ansprüche 1 bis 3, wobei höchstens 2 Massenprozent der Pulverkörner eine maximale Breite von weniger als 45 Mikrometern aufweisen.

5. Metallpulver nach einem der Ansprüche 1 bis 4, wobei die Pulverkörner die folgende Korngrößenverteilung aufweisen:
- zwischen 7 und 30 Massenprozent der Pulverkörner haben eine maximale Breite von mehr als oder gleich 90 Mikrometern und weniger als 106 Mikrometern, vorzugsweise zwischen 7 und 25 Massenprozent der Pulverkörner haben eine maximale Breite von mehr als oder gleich 90 Mikrometern und weniger als 106 Mikrometern und
- zwischen 1 und 10 Massenprozent der Pulverkörner haben eine maximale Breite von mehr als oder gleich 106 Mikrometern und weniger als 125 Mikrometern.

6. Verfahren zur Herstellung (S) eines Metallpulvers nach einem der Ansprüche 1 bis 5, umfassend die folgenden Schritte:
- S1: Schmelzen von Metallen, die Nickel, Chrom, Bor und Silizium umfassen, so dass eine flüssige Metalllegierung erhalten wird, die aus mindestens 90 Massenprozent Nickel, höchstens 0,3 Massenprozent Chrom, zwischen 1,3 und 1,7 Massenprozent Bor, zwischen 1,5 und 3,0 Massenprozent Silizium, Eisen in einem Massenprozent von weniger als 1,0 % und Kohlenstoff in einem Massenprozent von weniger als 0,2 % besteht
- S2: Einführen der flüssigen Metalllegierung durch Schwerkraft in einen Atomisierungsturm.
- S3: Zerstäuben der flüssigen Metalllegierung, um eine Pulverwolke zu erhalten
- S4: Sieben der Pulverwolke, um das Metallpulver zu erhalten, wobei das Herstellungsverfahren (S) **dadurch gekennzeichnet ist, dass** der Siebschritt so durchgeführt wird, dass mindestens 61 Massenprozent der Körner des Metallpulvers eine maximale Breite von größer oder gleich 45 Mikrometer und kleiner als 90 Mikrometer haben, wobei die Korngröße mit einem Laserdiffraktometer gemäß der Norm ISO 13320/2009 in der Trockennachricht oder durch Eintauchen des Pulvers in Wasser bestimmt wird, um ein Korngrößenspektrum von mehreren Proben der untersuchten Pulvercharge zu erhalten, wobei das Herstellungsverfahren (S) **dadurch gekennzeichnet ist, dass** ein Sauerstoffgehalt des Metallpulvers in Schritt S2 so gesteuert wird, dass das Metallpulver höchstens 0,025 Massenprozent Sauerstoff umfasst.

7. Herstellungsverfahren (S) nach Anspruch 6, bei dem in Schritt S4 die Körner so gesiebt werden, dass sie die folgende Korngrößenverteilung aufweisen:
- zwischen 1 und 10 Massenprozent der Pulverkörner haben eine maximale Breite von größer oder gleich 45 Mikrometern und kleiner als 53 Mikrometern
- zwischen 60 und 85 Massenprozent der Pulverkörner haben eine maximale Breite von größer oder gleich 53 Mikrometern und kleiner als 90 Mikrometern.

8. Herstellungsverfahren (S) nach einem der Ansprüche 6 oder 7, wobei in Schritt S4 die Körner so gesiebt werden, dass die Gesamtheit der Körner des Pulvers eine maximale Breite von weniger als 125 Mikrometer aufweist.

9. Herstellungsverfahren (S) nach einem der Ansprüche 6 bis 8, wobei in Schritt S4 die Körner so gesiebt werden, dass höchstens 2 Massenprozent der Pulverkörner eine maximale Breite von weniger als 45 Mikrometern aufweisen.

10. Herstellungsverfahren (S) nach einem der Ansprüche 7 bis 9, bei dem in Schritt S4 die Körner so gesiebt werden, dass sie die folgende Korngrößenverteilung aufweisen:
- zwischen 7 und 30 Massenprozent der Pulverkörner eine maximale Breite von größer oder gleich 90 Mikrometern und weniger als 106 Mikrometern aufweisen, vorzugsweise 7 und 25 Massenprozent der Pulverkörner eine maximale Breite von größer oder gleich 90 Mikrometern und weniger als 106 Mikrometern aufweisen und
- zwischen 1 und 10 Massenprozent der Pulverkörner eine maximale Breite von größer oder gleich 106 Mikrometern und weniger als 125 Mikrometern aufweisen.

11. Verfahren zum Wiederbeschichten einer Glaswarenform, umfassend die folgenden Schritte:
- Aufbringen einer Menge Metallpulver nach einem der Ansprüche 1 bis 5 auf eine Oberfläche der Glaswarenform und gleichzeitig
- lokales Aufschmelzen des Metallpulvers auf der Oberfläche der Glaswarenform mittels eines Strahls eines Lasers, so dass ein Verstärkungsbereich gebildet wird.

## Claims

1. A nickel-based metal powder for laser cladding of a glass mould, said metal powder consisting of at least 90 wt.% nickel, chromium, boron and silicon, the powder comprising at most 0.3 wt.% chromium, between 1.3 wt.% and 1.7 wt.% boron, between 1.5 wt.% and 3.0 wt.% silicon, the powder further comprising iron in a wt.% less than 1.0 wt.%, and carbon in a wt.% less than 0.2 wt.%, at least 61 wt.% of the grains of the metal powder have a maximum size greater than or equal to 45 micrometres and less than 90 micrometres, the grain size being determined by a laser diffractometer in accordance with the standard ISO 13320:2009 in a dry process or by immersing the powder in water so as to obtain a granulometric spectrum of several samples of the batch of powder studied, the metallic powder being **characterised in that** it comprises at most 0.025% by mass of oxygen.

2. The metal powder of claim 1, wherein the powder grains have the following particle size distribution:
- between 1 wt.% and 10 wt.% of the powder grains have a maximum size greater than or equal to 45 micrometres and less than 53 micrometres
- between 60 wt.% and 85 wt.% of the powder grains have a maximum size greater than or equal to 53 micrometres and less than 90 micrometres.

3. A metal powder according to any of claims 1 or 2, wherein the totality of the powder grains have a maximum size of less than 125 microns.

4. A metal powder according to any one of claims 1 to 3, wherein at most 2% by weight of the powder grains have a maximum size of less than 45 micrometers.

5. Metal powder according to one of claims 1 to 4, wherein the powder grains have the following particle size distribution:
- between 7 wt.% and 30 wt.% of the powder grains have a maximum size greater than or equal to 90 micrometres and less than 106 micrometres, preferably between 7 wt.% and 25 wt.% of the powder grains have a maximum size greater than or equal to 90 micrometres and less than 106 micrometres and
- between 1 wt.% and 10 wt.% of the powder grains have a maximum size greater than or equal to 106 micrometres and less than 125 micrometres.

6. A method of manufacturing (S) a metal powder according to any of claims 1 to 5, comprising the following steps:
- S1: melting metals comprising nickel, chromium, boron and silicon so as to obtain a liquid metal alloy consisting of at least 90 % by mass of nickel, at most 0.3 wt.% chromium, between 1.3 wt.% and 1.7 wt.% boron, between 1.5 wt.% and 3.0 wt.% silicon, the powder further comprising iron in a wt.% less than 1.0 wt.%, and carbon in a wt.% less than 0.2 wt.%
- S2: Introducing the liquid metal alloy by gravity into an atomisation tower
- S3: Atomizing the liquid metal alloy so as to obtain a powder cloud
- S4: Sieving the powder cloud so as to obtain the metal powder
the manufacturing process (S) being **characterised in that** the sieving step is carried out in such a way that at least 61% by mass of the grains of the metal powder have a maximum size greater than or equal to 45 micrometres and less than 90 micrometres, the granulometry being determined by means of a laser diffractometer in accordance with standard ISO 13320:2009 in a dry process or by immersing the powder in water in such a way as to obtain a granulometric spectrum of a plurality of samples of the batch of the powder studied,
the manufacturing method (S) being **characterised in that** an oxygen content of the metal powder is controlled in step S2 so that the metal powder comprises at most 0.025 wt.% of oxygen.

7. The manufacturing process (S) according to claim 6, wherein, in step S4, the grains are sieved so as to have the following particle size distribution:
- between 1 wt.% and 10 wt.% of the powder grains have a maximum size greater than or equal to 45 micrometres and less than 53 micrometres
- between 60 wt.% and 85 wt.% of the powder grains have a maximum size greater than or equal to 53 micrometres and less than 90 micrometres.

8. The manufacturing process (S) according to any of claims 6 or 7, wherein in step S4 the grains are sieved so that all the grains of the powder have a maximum size of less than 125 micrometers.

9. The manufacturing process (S) according to any of claims 6 to 8, wherein in step S4 the grains are sieved so that no more than 2 wt.% of the powder grains have a maximum size of less than 45 micrometers.

10. Manufacturing process (S) according to one of claims 7 to 9, wherein, during step S4, the grains are sieved so as to have the following particle size distribution:
- between 7 wt.% and 30 wt.% of the powder grains have a maximum size greater than or equal to 90 micrometres and less than 106 micrometres, preferably between 7 wt.% and 25 wt.% of the powder grains have a maximum size greater than or equal to 90 micrometres and less than 106 micrometres and
- between 1 wt.% and 10 wt.% of the powder grains have a maximum size greater than or equal to 106 micrometres and less than 125 micrometres.

11. A method of relining a glass mould comprising the following steps:
- depositing a quantity of metal powder according to one of claims 1 to 5 on a surface of the glass mould and, simultaneously,
- locally fusing the metal powder onto the surface of the glass mould by means of a laser beam so as to form a reinforcement zone.
